# EUROPEAN PATENT APPLICATION

(11) **EP 1 768 297 A2**
(43) Date of publication of application: **28.03.2007**
(21) Application number: 06019798.5
(22) Date of filing: 21.09.2006
(51) Int. Cl.: H04L 1/18

(54) **Method and apparatus for improving transmission delay of status report in a wireless communications system**

(30) Priority: 21.09.2005 US 596401 P
(71) Applicant: Innovative Sonic Limited, Tortola (VG)
(72) Inventor: Jiang, Sam Shiaw-Shiang, Peitou, Tapei City (TW)
(74) Representative: Hager, Thomas Johannes

(57) **Abstract**

A method for improving transmission delay of a status report in a wireless communications system operating in an Acknowledged Mode includes triggering a status report transfer procedure and transmitting a status report packet a predetermined number of times that is more than one. A related wireless communications device (400) has a control circuit (402), a central processing unit (408), a memory (410), and program code (412) for triggering a status report transfer procedure and transmitting a status report packet a predetermined number of times that is more than one.

## Description

This application claims the benefit of the filing date of U.S. Provisional Patent Application No. 60/596,401, filed on Sept. 21, 2005, the contents of which are hereby incorporated by reference.

The present invention relates to a method of improving transmission delay of a status report in a wireless communications system operating in Acknowledged Mode according to the pre-characterizing clause of claim 1.

Acknowledged Mode (AM) is appropriate for use in services with low requirements for real-time transmission, but high requirements for data accuracy. In AM, in order to provide high data accuracy, a Radio Link Control (RLC) layer protocol comprises an Automatic Retransmission Request (ARQ) process. A transmitter can accordingly trigger a polling function to determine a data transmission status. When a receiver receives a polling request, the receiver triggers a status report function to respond to the transmitter with the data reception status. When the transmitter desires to poll the receiver, the transmitter sets a polling bit of a Protocol Data Unit (PDU) to a preset value (such as "1"). When the receiver receives the PDU, i.e. when the receiver receives the polling request, the receiver uses a status report or a piggybacked status report to respond to the transmitter with the data reception status. In this way, the transmitter can execute follow-up processes, such as advancing a transmission window or retransmitting PDUs, based on the status report sent by the receiver.

Use of the ARQ process (the polling and status report process) improves the accuracy of the data transmission and utilizes radio resources efficiently. However, the ARQ process is time consuming. Upper layer signaling messages need to be transmitted accurately. AM transmission mode with ARQ process can fulfill the accuracy requirement. However, because of the nature of radio interference, the polling PDU and the status report may get lost during radio transmission. This will affect the transmission throughput of upper layer signaling messages. As an example, the call setup time may be delayed due to radio interference. Simply speaking, through use of the ARQ process, the prior art can guarantee data accuracy. However, if an error occurs in the transmission of related PDUs or the status report, a transmission delay is caused, which affects transmission throughput and comfort of end users.

This in mind, the present invention aims at providing a method of improving transmission delay of a status report in a wireless communications system operating in Acknowledged Mode that reduces transmission delay and improves ease of use.

This is achieved by a method of improving transmission delay of a status report in a wireless communications system operating in Acknowledged Mode according to claim 1. The dependent claims pertain to corresponding further developments and improvements.

As will be seen more clearly from the detailed description following below, the claimed method of improving transmission delay of a status report in a wireless communications system operating in Acknowledged Mode includes transmitting the status report a predetermined number of times that is greater than 1.

In the following, the invention is further illustrated by way of example, taking reference to the accompanying drawings. Thereof
Fig. 1 is a diagram of a status report transmission error in a mobile communications system according to the prior art,
Fig. 2 is a functional block diagram of a mobile communications device according to the present invention,
Fig. 3 is a diagram of a program code of Fig. 2,
Fig. 4 is a flow chart of a process according to the present invention, and
Fig. 5 is a diagram of a realization of the process of Fig. 4.

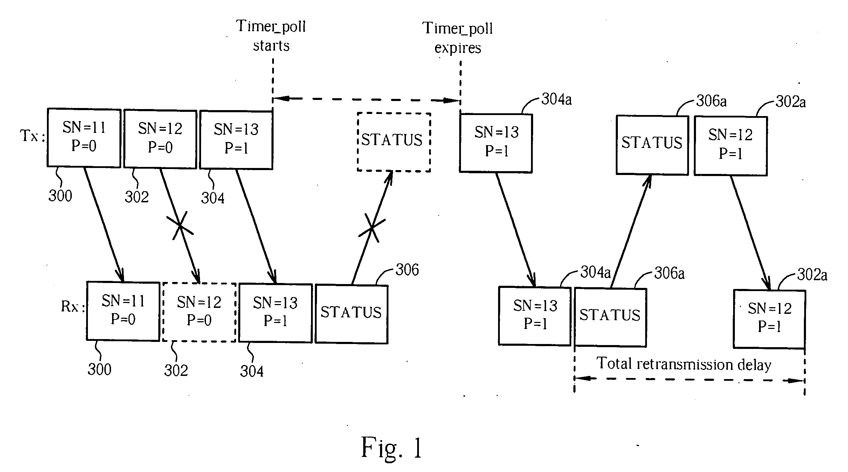

When the receiver receives the polling request, the receiver outputs a status report to the transmitter to prompt the transmitter to retransmit missing PDUs. At this time, if interference or an error occurs during radio transmission of the status report, the transmitter must wait for the timer Timer_poll to expire before it can retransmit the polling request. The receiver only outputs the status report again after receiving the retransmitted polling request. Please refer to Fig. 1. As shown in Fig. 1, the transmitter outputs PDUs 300, 302, 304 with respective sequence numbers (SN) 11, 12, 13 to carry an SDU (not shown), wherein a polling bit P of the PDU 304 is set to a value of "1." Suppose that radio interference occurs when transmitting the PDU 302 so that the receiver does not successfully receive the PDU 302. After the receiver receives a polling request contained in the PDU 304, the receiver responds with a status report 306 to prompt the transmitter to retransmit the PDU 302. At this time, if the status report 306 gets lost over the air due to radio interference so that the transmitter is unable to receive the status report 306, the transmitter has no way of knowing that the receiver has not yet received the PDU 302. When the timer Timer_poll eventually expires, the transmitter will determine the transmission error, retransmit the PDU 304a with SN = 13 and set the polling bit to 1. After the receiver receives the PDU 304a that was retransmitted, because the receiver still has yet to receive the PDU 302 with SN = 12, the receiver will send another status report 306a to the transmitter to prompt the transmitter to retransmit the PDU 302. Then, based on the status report 306a, the transmitter will retransmit a PDU 302a with SN = 12, and set the polling bit of the PDU 302a to a value of "1." In other words, when the receiver detects the polling request, the receiver will output the status report to the transmitter. If an error or radio interference occurs during transmission of the status report, although the prior art is able to detect the error, the prior art is unable to prevent the error. Thus, the throughput of upper layer signaling messages may be deteriorated. As a result, the utilization comfort of the ender users is affected due to ARQ process and radio interference.

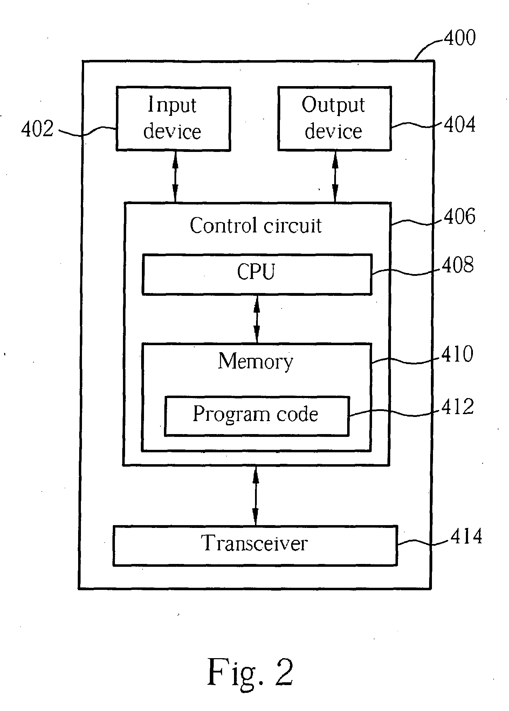

Please refer to Fig. 2. Fig. 2 is a functional block diagram of a wireless communications device 400 according to the present invention. For simplicity, Fig. 2 only shows an input device 402, an output device 404, a control circuit 406, a central processing unit (CPU) 408, a memory 410, program code 412, and a transceiver 414 of the wireless communications device 400. In the wireless communications device 400, the control circuit 406 executes the program code 412 in the memory 410 through the CPU 408, thereby controlling an operation of the wireless communications device 400. The wireless communications device 400 can receive signals input by a user through the input device 402, such as a keyboard, and can output images and sounds through the output device 404, such as a monitor or a speaker. The transceiver 414 is used to receive and transmit wireless signals, transmitting received signals to the control circuit 406, and outputting signals generated by the control circuit 406 wirelessly. From a perspective of a communications protocol framework, the transceiver 414 can be seen as a portion of Layer 1, and the control circuit 406 can be utilized to realize functions of Layer 2 and Layer 3.

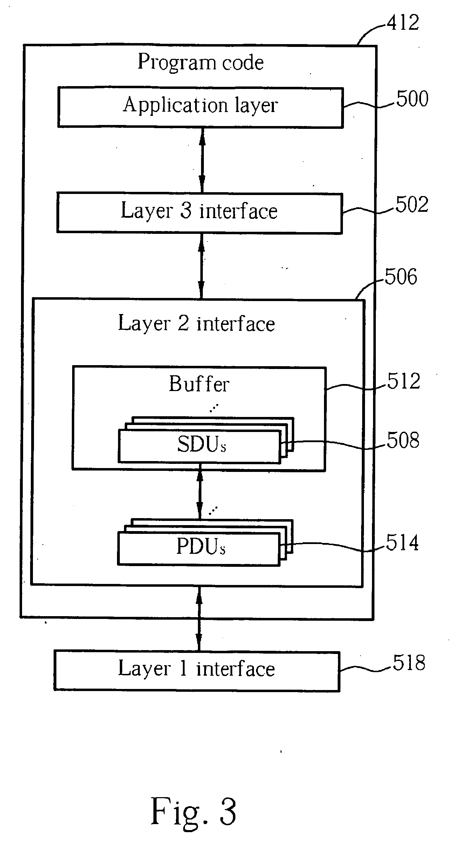

Please continue to refer to Fig. 3. Fig. 3 is a diagram of the program code 412 shown in Fig. 2. The program code 412 comprises an application layer 500, a Layer 3 interface 502, and a Layer 2 interface 506, and is coupled to a Layer 1 interface 518. When a signal is transmitted, the Layer 2 interface 506 forms a plurality of SDUs 508 according to data outputted by Layer 3 interface 502, and stores the plurality of SDUs 508 in a buffer 512. Then, according to the SDUs 508 stored in the buffer 512, the Layer 2 interface 506 generates a plurality of PDUs 514, and sends the plurality of PDUs 514 to a destination terminal through the Layer 1 interface 518. In contrast, when a wireless signal is received, the signal is received through the Layer 1 interface 518, then outputted as PDUs 514 to the Layer 2 interface 506. The Layer 2 interface 506 restores the PDUs 514 to SDUs 508 and stores the SDUs 508 in the buffer 512. Last, the Layer 2 interface 506 transmits the SDUs 508 stored in the buffer 512 to the Layer 3 interface 502.

The wireless communications device 400 is preferably used in a 3G mobile communications system. When the wireless communications device 400 is operated in AM, to reduce the transmission delay of the prior art, the present invention utilizes a following process to set a related algorithm in the program code 412 to resolve the problems of the prior art.

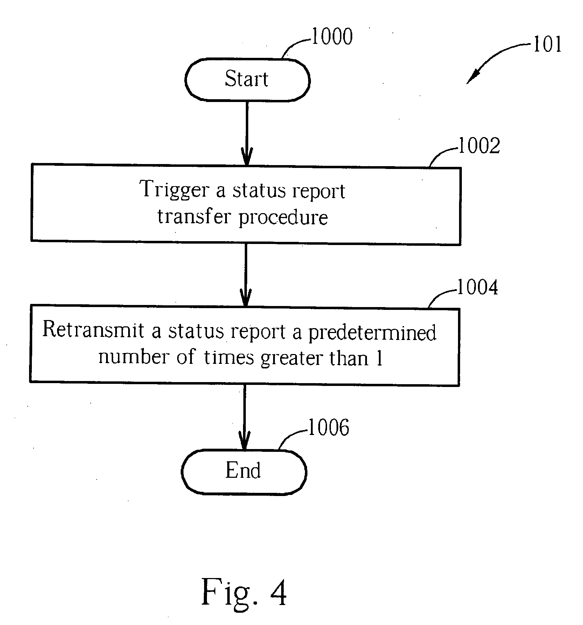

Please refer to Fig. 4. Fig. 4 is a flow chart of a process 101 according to the present invention. The process 101 comprises steps of:
Step 1000: Start.
Step 1002: Trigger a status report transfer procedure.
Step 1004: Retransmit a status report a predetermined number of times that is greater than 1.
Step 1006: End:

Thus, according to process 101, when the receiver is triggered to transmit a status report, the receiver transmits the status report more than once to guarantee that the status report is received successfully by the transmitter. In other words, the process 101 increases a probability that the status report will be transmitted accurately to the transmitter by retransmitting the status report, thereby reducing transmission delay.

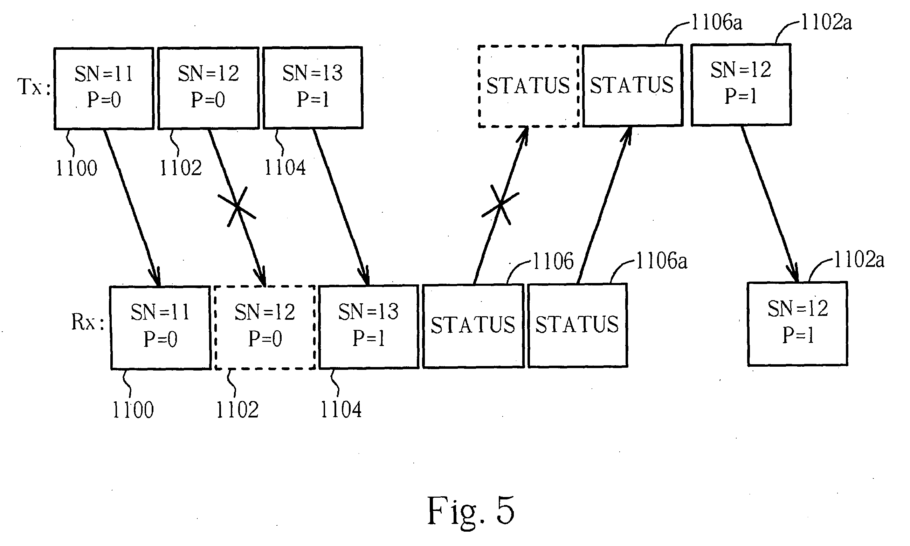

For example, in Fig. 5, the transmitter outputs PDUs 1100, 1102, 1104 with respective SNs 11, 12, 13 to carry an SDU (not shown), and the polling bit of the PDU 1104 has a value of "1." Suppose that radio interference occurs when transmitting the PDU 1102 so that the receiver is unable to successfully receive the PDU 1102. When the receiver receives the polling request contained in the PDU 1104, the receiver will transmit the status report 1106, 1106a twice, in order to prompt the transmitter to retransmit the PDU 1102 that was not received. At this time, if the status report 1106 gets lost over the air due to radio interference, the transmitter can still receive the status report 1106a, thereby determining that the receiver did not receive the PDU 1102 with SN = 12. Thus, the transmitter will retransmit the PDU 1102a with SN = 12. Generally, the polling bit of the PDU 1102a is set to a value of "1," but how the polling bit is set in the PDU 1102a is not directly related to the present invention, and is not a necessary characteristic of the present invention. In other words, according to the process 101, if the receiver is triggered to transmit a status report, e.g., detecting a missing PDU, the receiver will repeatedly transmit the status report to the transmitter to prompt the transmitter to retransmit the missing PDU. Because the present invention repeatedly transmits the status report, the present invention can prevent one cause of delay that arises due to radio interference, thereby increasing ease of use.

Summing up the above description, the present invention improves the probability of success in the status report transfer procedure by repeatedly transmitting the status report, thereby reducing transmission delay and improving ease of use.

## Claims

1. A method of improving transmission delay of a status report in a wireless communications system operating in Acknowledged Mode comprising:
triggering a status report transfer procedure; and
**characterised by**:
transmitting the status report a predetermined number of times that is greater than 1.

2. A wireless communications apparatus comprising a central processing unit in electrical communications with a memory, **characterized in that** the memory comprises program code for implementing the method of claim 1.

3. The method of claim 1 and the wireless communications apparatus of claim 2, **characterized in that** the predetermined number of times is 2.

4. The method of claim 1 and the wireless communications apparatus of claim 2, **characterized in that** the status report is a piggybacked status report.
